# NEUE EUROPÄISCHE PATENTSCHRIFT

(11) **EP 0 320 643 B2**
(45) Veröffentlichungstag und Bekanntmachung des Hinweises auf die Entscheidung über den Einspruch: **21.09.1994**
(45) Hinweis auf die Patenterteilung: 17.06.1992
(21) Anmeldenummer: 88119256.1
(22) Anmeldetag: 19.11.1988
(51) Int. Cl.: B60K 15/01, B60K 15/04

(54) **Kraftstoffbehälter**
Fuel tank
Réservoir de carburant

(30) Priorität: 12.12.1987 DE 3742258
(43) Veröffentlichungstag der Anmeldung: 21.06.1989
(73) Patentinhaber: DAIMLER-BENZ AKTIENGESELLSCHAFT, 70327 Stuttgart (DE)
(72) Erfinder: Oeffling, Heiner, D-7448 Wolfschlugen (DE); Böhringer, Harald, D-7303 Neuhausen (DE); Scheurenbrand, Dieter, D-7448 Wolfschlugen (DE); Wawra, Helmut, Dr., D-7054 Korb (DE)

(56) Entgegenhaltungen:
- DE-A- 3 605 708
- DE-C- 3 602 844
- US-A- 4 142 647

## Beschreibung

Die Erfindung betrifft einen Kraftstoffbehälter mit einer in dessen Einfüllstutzen angeordneten Fangvorrichtung zum Auffangen von Kraftstoffdämpfen beim Betanken mit den Merkmalen des Oberbegriffes des Patentanspruches.

Ein Kraftstoffbehälter mit einer solchen Fangvorrichtung ist bekannt (DE-OS 36 05 708). Das Steuerventil dieser Fangvorrichtung stellt sicher, daß zwischen Aktivkohlefilter und Kraftstoffbehälter bei verschlossenem Einfüllstutzen keine Verbindung besteht, somit in letzterem bei entsprechender Auslegung einer Be- und Entlüfungseinrichtung für den Betrieb der Brennkraftmaschine des betreffenden Kraftfahrzeuges ein erwünschter Überdruck aufrechterhalten wird und außerdem gewährleistet ist, daß bei unfallbedingter Schräg- oder Kopflage des Kraftstoffbehälters aus diesem über den Aktivkohlefilter kein Kraftstoff ins Freie austreten kann.

Beim Betanken ist das Steuerventil dieser Fangvorrichtung in seine Durchlaßstellung zu bringen, damit die aus Kohlenwasserstoffen bestehenden und deshalb in hohem Maß gesundheitsgefährdenden Kraftstoffdämpfe aus dem Kraftstoffbehälter nicht in die Atmosphäre ausströmen sondern in den Aktivkohlefilter abströmen können.

Zum Öffnen des Steuerventils dient dabei indirekt das in den Einfüllstützen einzuführende Füllrohr der Zapfpistole. Um hierbei zu vermeiden, das bereits beim Einführen desselben größere Mengen an Kraftstoffdämpfen ins Freie ausströmen können, ist für das Füllrohr innerhalb des Einfüllstutzens ein diesen verengender, das Zapfpistolen-Füllrohr abdichtend aufnehmender Führungskanal vorgesehen, dessen inneres Ende mittels einer selbstschließenden Verschlußklappe bei aus dem Einfüllstutzen entnommener Zapfpistole gasdicht verschlossen gehalten wird.

Das Steuerventil bildet dabei eine Baueinheit für sich, dessen Ventilglied auf mechanischem Wege durch die mittels des Zapfpistolen-Füllrohres in ihre Offenstellung zu verschwenkende Verschlußklappe in die Durchlaßstellung zu bewegen ist.

Zu diesem Zweck ist die Verschlußklappe mit einem gabelförmigen Betätigungshebel ausgestattet, dessen Gabelschenkel sich bei Verschwenken der Verschlußklappe in ihre Offenstellung an einen Kopf eines Ventilgliedschaftes des Steuerventils anlegen und dadurch das Ventilglied gegen die Wirkung einer Rückstellkraft in seine eine Verbindung des Kraftstoffbehälters zum Aktivkohlefilter herstellende Durchlaßstellung verschieben. Dadurch können Kraftstoffdämpfe wahrend des Tankvorganges abströmen, ohne aus dem Einfüllstutzen zu entweichen.

Die bekannte Konstrunktion erfordert für das Steuerventil eine Ventilmechanik mit speziell ausgebildetem Ventilglied, das durch die gleichfalls besonders auszubildende Verschlußklappe zu betätigen ist sowie zwei außerhalb des Einfüllstutzens zu verlegende, am Steuerventil bzw. Einfüllstutzen anzuschließende Leitungen, von denen die eine vom Kraftstoffbehälter wegzuführen und die andere am Aktivkohlefilter anzuschließen ist.

Aufgabe der vorliegenden Erfindung ist es, sowohl die Konstruktion und Einbau des Steuerventils als auch die zu seiner Betätigung erforderlichen Mittel zu vereinfachen und derart auszulegen, daß lediglich noch eine außerhalb des Einfüllstutzens zu installierende Leitung, nämlich die das Steuerventil mit dem Aktivkohlefilter verbindende Leitung, vorzusehen ist.

Des weiteren soll sichergestellt sein, daß einerseits entstehender Überdruck nie so groß werden kann, daß dadurch das Einführen des Zapfpistolen-Füllrohres beeinträchtigt werden könnte; andererseits soll ein Druckausgleich zwischen Kraftstoffbehälter und Führungskanal erst ab einem bestimmten Überdruck herbeigeführt werden.

Diese Aufgabe wird erfindungsgemäß durch die kennzeichnenden Merkmale des Patentanspruches gelöst.

Bei der erfindungsgemäßen Konstruktion entfällt somit ein spezielles Ventilglied, indem die Verschlußklappe dessen Aufgabe mit übernimmt. Eine durch die Verschlußklappe zu verschließende Öffnung bildet dabei den sich innerhalb des Einfüllstutzens befindenden Ventilsitz des Steuerventils, so daß der Einfüllstutzen zugleich die Funktion einer Leitung zur Verbindung des Kraftstoffdämpfe aufnehmenden Behälterraumes mit dem Steuerventil erhält.

Dabei bilden die Verschlußklappe des Steuerventiles und der Führungskanal in einem Gehäuse zu einer Baueinheit zusammengefaßte Komponenten, welche Baueinheit sich vorteilhaft im verschließbaren Endstück des Einfüllstutzens installieren läßt. Die durch die Verschlußklappe zu verschließende Öffnung des den Einfüllstutzen verengenden, das Zapfpistolen-Füllrohr aufnehmenden Führungskanals bildet dabei zugleich auch den Ventilsitz des Steuerventils.

Durch die im Gehäuse zwischen Führungskanal und durch die Verschlußklappe verschließbare Stirnwandöffnung vorgesehene, ein eingeführtes Zapfpistolen-Füllrohr abdichtend umschließende Dichtung wird beim Betanken ein zur Atmosphäre hin abgeschlossener Zwischenraum geschaffen, in den über einen zwischen Zapfpistolen-Füllrohr und Innenumfang der Stirnwandöffnung vorhandenen Ringspalt die Kraftstoffdämpfe zu- und aus diesem zum Aktivkohlefilter abströmen können.

Die Anordnung des mit dem Zwischenraum und dem Aktivkohlefilter verbundenen Überdruckventils schafft die Voraussetzung dafür, daß erst ab einem bestimmten Überdruck ein Druckausgleich herbeigeführt wird. Die Schließkraft des Überdruckventils kann dabei so gewählt werden, daß die durch den Überdruck erzeugte, auf die Verschlußklappe wirkende Zuhaltekraft das Einführen des Zapfpistolen-Füllrohres nicht behindern kann, und im Falle eines beispielsweise durch Feuer verursachten, unverhältnismäßig großen Druckanstieges im Kraftstoffbehälter der Überdruck durch den üblicherweise als Überdruckventil ausgebildeten Einfüllstutzen-Verschlußdeckel unkritisch gehalten werden kann.

Das Überdruckventil bietet einen weiteren Vorteil insofern, als beispielsweise bei Kurvenfahrt kein Kraftstoff auslaufen kann, sofern es vergessen worden sein sollte, nach erfolgtem Betanken den Einfüllstutzen ordnungsgemäß zu verschließen. Außerdem ist dadurch sichergestellt, daß beim Öffnen des Einfüllstutzens weder Kraftstoff ausdampfen noch aus der Stutzenöffnung herausschwappen kann.

Neben der DE-PS 36 05 708, von der die Erfindung ausgeht, offenbart die DE-PS 36 02 844 bereits eine Verschlußvorrichtung für einen Kraftstoffbehälter-Einfüllstutzen, durch die beim Betankungsvorgang verdrängte Kraftstoffdämpfe abgeleitet werden.

Diese Verschlußvorrichtung weist gleichfalls ein selbstschließendes Steuerventil auf, dessen Ventilglied durch eine Verschlußklappe gebildet ist, die durch ein in den Einfüllstutzen eingeführtes Zapfpistolen-Füllrohr gegen die Wirkung einer Schließkraft in ihre Offenstellung verschwenkbar ist.

Das Steuerventil dient aber lediglich dazu, die in dessen Offenstellung aus dem Einfüllstutzen abströmenden Kraftstoffdämpfe einem Ringkanal eines den Einfüllstutzen übergreifenden Blendenringes zuzuführen, in welchen sie derart umgelenkt und über den gesamten Umfang des Blendenringes verteilt der Atmosphäre derart zugeführt werden, daß die den Kraftstoffbehälter füllende Person nicht durch die Dämpfe belästigt oder gefährdet wird.

In der Zeichnung Fig. 5 bis 7 ist ein Ausführungsbeispiel der Erfindung dargestellt. Es zeigen:
Fig.1 stark schematisiert eine Gesamtansicht eines Kraffstoffbehälters, dessen Einfüllstutzen mit einer Vorrichtung zum Auffangen von Kraftstoffdämpfen ausgebildet ist,
Fig.2 einen in Fig. 1 durch einen strichpunktierten Kreis angedeuteten Ausschnitt, in vergrößertem Maßstab und im Längsschnitt dargestellt, zur Veranschaulichung eines ersten Ausführungsbeispiels der Erfindung,
Fig.3 einen Schnitt entlang der Linie 111 - 111 der Fig. 2, wobei sich die Verschlußklappe in ihrer Schließstellung befindet,
Fig.4 einen Teilschnitt der Linie IV - IV der Fig. 3,
Fig.5 eine Darstellung ähnlich Fig 2, zur Veranschaulichung des Ausführungsbeispiels der Erfindung,
Fig.6 einen Schnitt entlang der Linie VI - VI der Fig. 5, wobei sich die Verschlußklappe in ihrer Schließstellung befindet, und
Fig.7 einen Teilschnitt entlang der Linie VII - VII der Fig. 6.

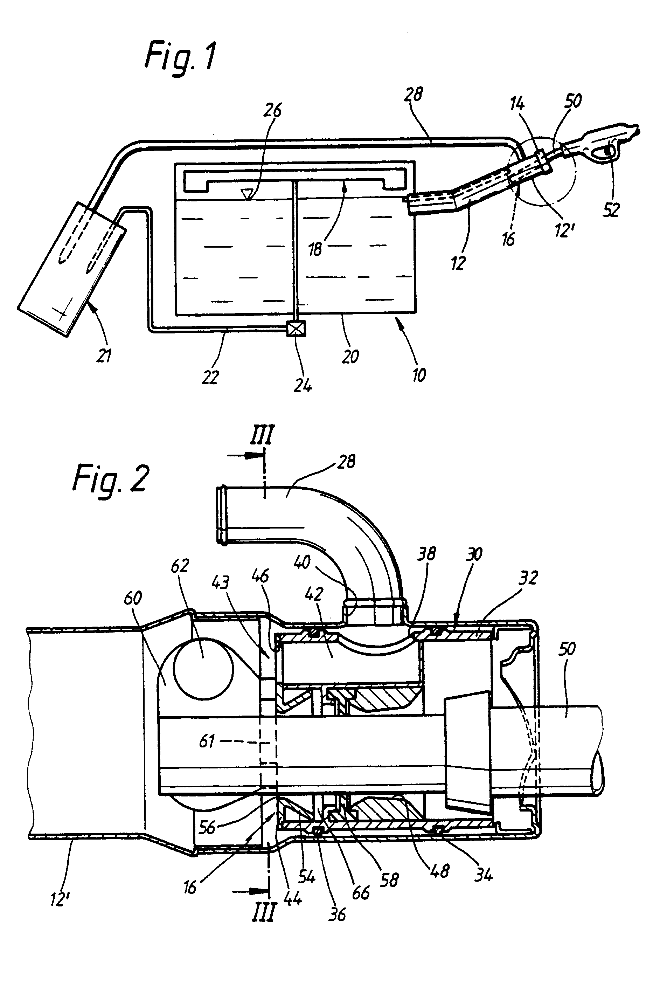

10 bezeichnet einen Kraftstoffbehälter, dessen Einfüllstutzen 12 innerhalb seines mittels eines Verschlußdeckels 14 verschließbaren Stutzenendstückes 12' mit einer Fangvorrichtung 16 zum Auffangen von Krattstoffdämpfen beim Betanken ausgestattet ist (Fig. 2).

18 bezeichnet eine an sich bekannte, im Kraftstoffbehälter 10 installierte Be- und Entlüftungseinrichtung, von der eine beispielsweise aus dem Behälterboden 20 austretende und zu einem Aktivkohlefilter 21 führende Be- und Entlüftungsleitung 22 wegführt, die noch mit einem Tanklüftungsventil 24 ausgestattet ist.

Die Fangvorrichtung 16 befindet sich im Einfüllstutzenendstück 12' oberhalb des maximalen Behälterfüllniveaus 26. Sie bildet eine Baueinheit, die als Ganzes in das Einfüllstutzenendstück 12' abgedichtet eingesetzt und über eine am letzteren angeschlossene Verbindungsleitung 28 mit dem Aktivkohlefilter 21 verbunden ist.

Die Fangvorrichtung 16 weist ein zylindrisches Gehäuse 30 auf, dessen Gehäusemantel 32 am Außenumfang im Achsabstand voneinander zwei Dichtringe 34 und 36 trägt, die am Innenumfang des Einfüllstutzenendstücke 12' abdichtend anliegen. Zwischen beiden Dichtringen 34 und 36 befindet sich eine Öffnung 38 des Gehäusemantels 32, die zu einer stutzenseitigen Anschlußöffnung 40 der Verbindungsleitung 28 führt.

Die Öffnung 38 des Gehäusemantels 32 mündet radial in einen sich innerhalb des Gehäuses 30 befindenden Ventilraum 42 eines Steuerventils 43 ein, der vom Stutzeninnern aus lediglich über eine in einer dem Kraftstoffbehälter 10 zugekehrten Gehäusestirnwand 44 vorgesehenen Stirnwandöffnung 46 zugänglich ist. In radialem Abstand zum Ventilraum 42 befindet sich im Gehäuse 30 ein sich parallel zur Gehäuseachse erstreckender Führungskanal 48, in welchen das Füllrohr 50 einer Zapfpistole 52 zum Betanken einführbar ist.

Der Führungskanal 48 mündet in Einsteckrichtung des Füllrohres 50 in einen sich in dieser Richtung verjüngenden Trichter 54 ein, dessen kleinster Durchmesser eine weitere Stirnwandöffnung 56 bildet.

58 bezeichnet einen im Führungskanal 48 angeordneten Dichtring, der bei eingestecktem Zapfpistolen-Füllrohr 50 dieses am Außenumfang abdichtend umschließt und damit sicherstellt, daß im Einfüllstutzen 12 anstehende Kraftstoffdämpfe nicht über den Führungskanal 48 in die Atmosphäre entweichen können.

Beiden Stirnwandöffnungen 46 und 56 ist eine gemeinsame Verschlußklappe 60 zugeordnet, die an der Gehäusestirnwand 44 bei 61 scharnierartig angelenkt und gegen die Wirkung einer nicht dargestellten Rückstellfeder, beispielsweise einer Drehfeder, durch das Zapfpistolen-Füllrohr 50 beim Einführen in den Führungskanal 48 und die Stirnwandöffnung 56 in ihre Offen- bzw. Durchlaßstellung (Fig. 2) verschwenkbar ist.

Für das Steuerventil 43 bildet die Verschlußklappe 60 dessen in eine Schließ- und Durchlaßstellung steuerbares Ventilglied. Zum Zwecke eines zuverlässigen Ventilverschlusses ist hierbei die Verschlußklappe 60 noch mit einer am Rand der Stirnwandöffnung 46 aufruhenden, z.B. scheibenförmigen Elastomer-Dichtung 62 ausgestattet.

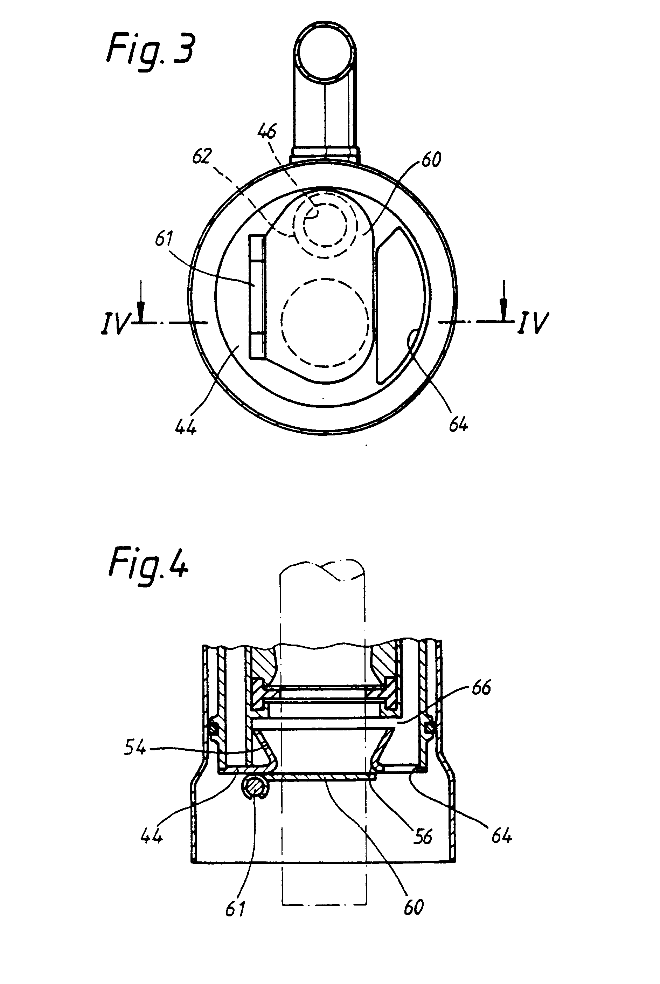

Wie die Fig. 3 und 4 zeigen, enthält die Gehäusestirnwand 44 noch eine weitere Stirnwandöffnung 64, durch welche bei aus dem Einfüllstutzen 12 entnommenem Zapfpistolen-Füllrohr 50 über einen zwischen dem Trichter 54 und dem Führungskanal 48 vorhandenen Zwischenraum 66 (Fig. 2) ein Bypass vom Kraftstoffbehälter 10 zu dem vorzugsweise mit einem Sicherheitsventil ausgestatteten Verschlußdeckel 14 geschaffen ist. Es herrscht dadurch bei geschlossener Verschlußklappe 60 auch im Bereich des Führungskanales 48 bis zum Verschlußdeckel 14 der gleiche Druck wie im übrigen Teil des Einfüllstutzens 12 bzw. im Kraftstoffbehälter 10, so daß sich die Verschlußklappe 60 leicht öffnen läßt. In der Kopflage des Krattstoffbehälters 10 ist dabei sichergestellt, daß über das Steuerventil 43 kein Kraftstoff über den Aktivkohlefilter 21 abfließen kann.

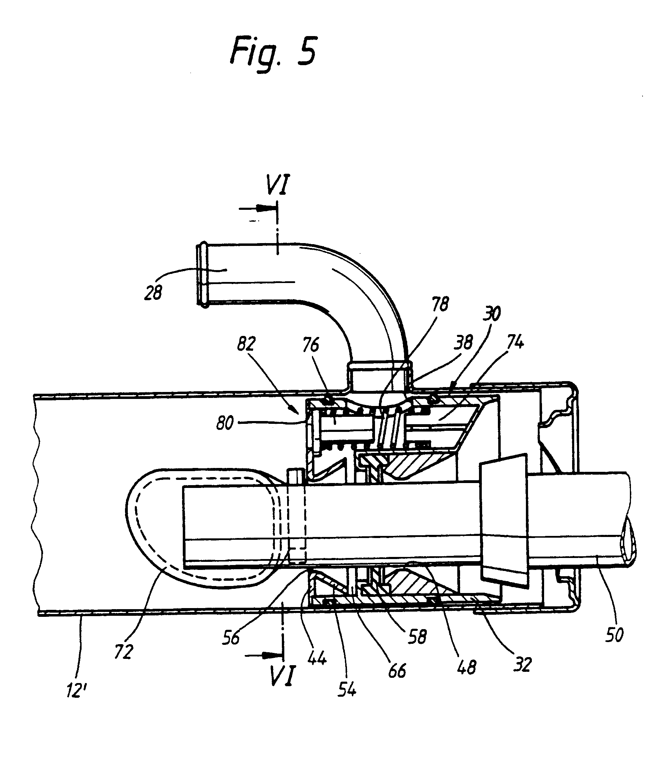

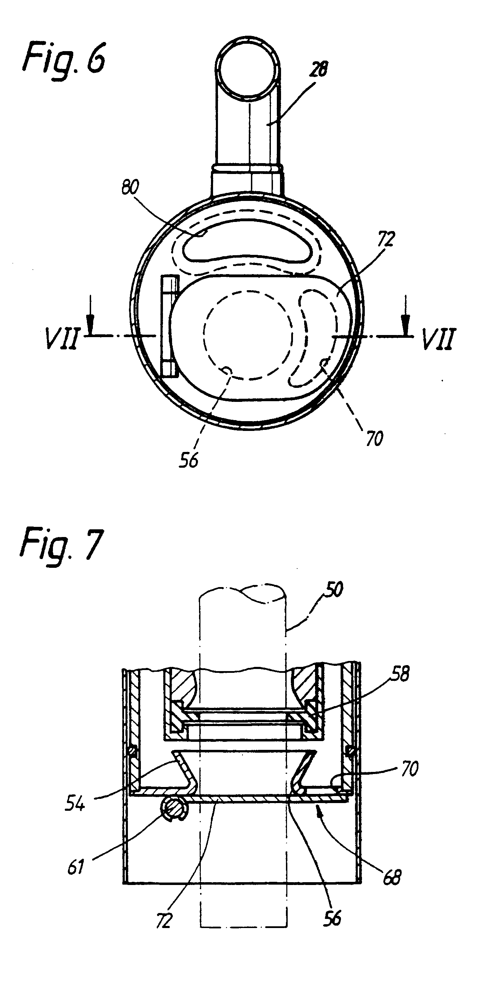

Die Konstruktionsvariante gemäß den Fig. 5 bis 7 unterscheidet sich von der vorbeschriebenen Konstruktion dadurch, daß anstelle der den Bypass bildenden Stirnwandöffnung 64 eine einen Teil eines Steuerventils 68 bildende und durch eine Verschlußklappe 72 verschließbare Stirnwandöffnung 70 vorgesehen ist, die über den Zwischenraum 66 mit der zum Aktivkohlefilter 21 führenden Verbindungsleitung 28 in Verbindung steht. Anstelle des Ventilraumes 42 ist ein mit der Verbindungsleitung 28 verbundener Gehäuseraum 74 vorgesehen, in weichem ein Ventilglied 76 verschiebbar angeordnet ist, das eine Druckfeder 78 ständig in seiner eine Stirnwandöffnung 80 geschlossen haltenden Schließstellung zu halten versucht und das zusammen mit dieser ein Sicherheitsventil 82 bildet.

Diese Ausführungsform der Fangvorrichtung verhindert bei geschlossener Verschlußklappe 72 in Kopflage des Kraftstoffbehälters 10 gleichfalls ein Auslaufen von Kraftstoff über den Aktivkohlefilter 21. Des weiteren wird auch bei offengelassenem Einfüllstutzen 12 kein Kraftstoff aus diesem auslaufen und ebensowenig Kraftstoff beim Öffnen des Einfüllstutzens 12 ausschwappen.

Außerdem verhindert diese Konstruktion den Austritt von Kraftstoffdämpfen beim Stutzenöffnen. Schließlich öffnet sich das Sicherheitsventil 82 bei Erreichen eines bestimmten Überdruckes im Kraftstoffbehälter, so daß der Behälterinnendruck unkritisch gehalten werden kann.

## Patentansprüche

1. Kraftstoffbehälter (10) mit einer in dessen Einfüllstutzen (12) angeordneten Fangvorrichtung (16) zum Auffangen von Kraftstoffdämpfen beim Betanken, die zum Verbinden eines oberhalb des maximalen Kraftstoffniveaus verbleibenden Behälterraumes mit einem an eine Motoransaugleitung angeschlossenen Aktivkohlefilter (21) ein selbstschließendes Steuerventil (43) aufweist, dessen Ventilglied durch eine Verschlußklappe (60) eines den Einfüllstutzen innen verengenden Führungskanal (48) in seine Offenstellung steuerbar ist, welche Verschlußklappe bei abgedichtetem Einführen eines Zapfpistolen-Füllrohres (50) in den Führungskanal gegen eine Schließkraft in ihre Offenstellung verschwenkbar ist,
gekennzeichnet durch
die Kombination folgender Merkmale:
a: die Verschlußklappe (72) bildet zugleich das Ventilglied des Steuerventils (68)
b: Verschlußklappe (72) und Führungskanal (48) bilden Teile eines im verschließbaren Endstück (12') des Einfüllstutzens (12) abgedichtet angeordneten, einen Einsatz bildenden Gehäuses (30), dessen Gehäusemantel (32) eine einerseits mit dem Steuerventil (68) und andererseits mit einer zum Aktivkohlefilter (21) führenden Abzweigung des Einfüllstutzens (12) verbundende Mantelöffnung (38) aufweist,
c: in Einsteckrichtung des Zapfpistolen-Führungsrohres (50) gesehen schließt sich an den Führungskanal (48) eine das Zapfpistolen-Füllrohr (50) abdichtend umschließende Dichtung (58) und im Abstand zu dieser eine Stirnwand (44) des Gehäuses (30) mit einer zum Führungskanal (48) fluchtenden und mittels der Verschlußklappe (72) verschließbaren Stirnwandöffnung (56) an,
d: der Durchmesser der Stirnwandöffnung (56) ist größer als der Außendurchmesser des Zapfpistolen-Füllrohres (50) und ein zwischen Dichtung (58) und Stirnwandöffnung (56) vorhandener Zwischenraum (66) ist mit der Mantelöffnung (38) des Gehäuses (30) verbunden,
e: eine weitere, mit dem zwischen der Dichtung (58) und der dieser fluchtend zugeordneten Stirnwandöffnung (56) vorhandenen Zwischenraum (66) verbundene Stirnwandöffnung (80) bildet einen Ventilsitz eines im Gehäuse (30) vorgesehenen Überdruckventiles (82) und ist im geöffneten Zustand mit der Mantelöffnung (32) des Gehäuses (30) verbunden.

## Claims

1. A fuel tank (10) with a collector device (16) mounted in its filling inlet (12) for collecting fuel fumes when filling the tank, which device, for the purpose of connecting a tank space remaining above the maximum fuel level with an active carbon filter (21) connected to an engine suction duct, has a self-closing control valve (43), the valve member of which is controlled into its open position by a closing flap (60) of a guide duct (48) internally. narrowing the filling inlet, which closing flap, on the sealed introduction of a filling hose nozzle (50) into the guide duct, is pivotable into its open position against a closing force, characterized by the combination of the following characteristics:
a) the closing flap (72) forms at the same time the valve member of the control valve (68);
b) the closing flap (72) and the guide duct (48) form parts of a housing (30) sealingly mounted in the closable end piece (12') of the filling inlet (12) forming an insert, the shell of which housing (32) has a shell opening (38) connected on the one hand with the control valve (68) and on the other hand with a derivation of the filling inlet (12) leading to the active carbon filter (21);
c) when seen in the insertion direction of the filling hose nozzle (50), there connects onto the guide duct (48) a seal (58) sealingly surrounding the filling hose nozzle (50), and, spaced from this, a front wall (44) of the housing (30), with a front wall opening (56) aligned on the guide duct (48) and closable by means of the closing flap (72);
d) the diameter of the front wall opening (56) is greater than the outer diameter of the filling hose nozzle (50), and an intermediate space (66) provided between the seal (58) and the front wall opening (56) is connected with the shell opening (38) of the housing (30).
e) a further front wall opening (80) connected with the intermediate space (66) provided between the seal (58) and the front wall opening (56) associated in alignment with it, forms a valve seat of a pressure control valve (82) provided in the housing (30) and, in the open state, is connected with the shell opening (32) of the housing (30).

## Revendications

1. Réservoir de carburant (10) dont un dispositif collecteur (16) est placé dans le goulot de remplissage (12) pour capter les vapeurs de carburant lors du remplissage de carburant, lequel dispositif présente une valve de régulation autoobturante (43) servant à relier un compartiment du réservoir, restant au-dessus du niveau maximum de carburant, à un filtre (21) à charbon actif raccordé à une conduite d'aspiration côté moteur, valve de régulation dont l'élément de valve est orientable dans sa position ouverte au moyen d'un volet d'obturation (60) d'un conduit de guidage (48) rétrécissant de l'intérieur la goulot de remplissage, lequel volet d'obturation peut, en position ouverte, pivoter contre une force de fermeture, lors de l'introduction rendue étanche d'un tuyau de remplissage (50) à pistolet dans le conduit de guidage,
caractérisé
par la combinaison des caractéristiques suivantes :
a : le volet d'obturation (72) constitue en même temps l'élément de valve de la valve de régulation (68),
b : le volet d'obturation (72) et le conduit de guidage (48) constituent des éléments d'un boitier (30) disposé de façon étanche et formant un insert dans l'embout (12') verrouillable du goulot de remplissage (12), boitier dont l'enveloppe (32) présente une ouverture (38) faisant la liaison, d'une part, avec la valve de régulation (68) et, d'autre part, avec une bifurcation du goulot de remplissage (12) conduisant au filtre (21) à charbon actif,
c : en regardant dans le sens d'introduction du tuyau de remplissage (50) à pistolet, un joint (58) se forme au niveau du conduit de guidage (48), entourant de façon étanche le tuyau de remplissage (50) à pistolet et, à distance du joint, se forme une paroi frontale (44) du boîtier (30) comportant une ouverture de paroi frontale (56) alignée par rapport au conduit de guidage (48) et verrouillable ou moyen du volet d'obturation (72),
d : le diamètre de l'ouverture (56) de la paroi frontale est plus grand que le diamètre extérieur du tuyau de remplissage (50) à pistolet et un espace intermédiaire (66), existant entre le joint (58) et l'ouverture (56) de paroi frontale, est relié à l'ouverture d'enveloppe (38) du boîtier (30),
e : une outre ouverture (80) de paroi frontale, reliée à l'espace intermédiaire (66) existant entre le joint (58) et l'ouverture de paroi frontale (56), affectée à ce joint et alignée par rapport à lui, constitue un siège de clapet d'un clapet de surpression (82) prévu dans le boîtier (30) et est reliée, lorsqu'elle est ouverte, à l'ouverture d'enveloppe (80) du boîtier (30).
